# EUROPÄISCHE PATENTSCHRIFT

(11) **EP 1 338 935 B1**
(45) Veröffentlichungstag und Bekanntmachung des Hinweises auf die Patenterteilung: **02.08.2006**
(21) Anmeldenummer: 03003278.3
(22) Anmeldetag: 24.02.2003
(51) Int. Cl.: G05B 19/048

(54) **Schnittstellenvorrichtung für ein Haushaltsgerät und Haushaltsgerät**
Interface device for a household appliance and household appliance
Dispositif d'interface pour un appareil domestique et appareil domestique

(30) Priorität: 26.02.2002 DE 10208221
(43) Veröffentlichungstag der Anmeldung: 27.08.2003
(73) Patentinhaber: BSH Bosch und Siemens Hausgeräte GmbH, 81739 München (DE)
(72) Erfinder: Buchner, Theo, 93333 Neustadt (DE); Engl, Peter, 93146 Laaber (DE); Gaugler, Johannes, 93055 Regensburg (DE)

(56) Entgegenhaltungen:
- EP-A- 0 858 143
- EP-A- 1 211 470
- WO-A-99/43068
- DE-A- 19 936 674
- FR-A- 2 770 017

## Beschreibung

Die Erfindung betrifft eine Schnittstellenvorrichtung für ein Haushaltsgerät sowie ein Haushaltsgerät.

Es ist bekannt, ein Haushaltsgerät mittels einer Identifizierungsangabe eindeutig zu kennzeichnen. Die Identifizierungsangabe kann enthalten:
- eine Angabe über den Hersteller des Haushaltsgeräts,
- eine Angabe über die Geräteklasse des Haushaltsgeräts,
- eine Angabe über den Gerätetyp des Haushaltsgeräts,
- eine Angabe über die Gerätevariante des Haushaltsgeräts,
- eine Angabe über die in dem Haushaltsgerät installierte' Hardware,
- eine Angabe über die in dem Haushaltsgerät installierte Software.

Die Identifizierungsangabe ist üblicherweise in einem Speicher der geräteinternen elektronischen Steuerung des Haushaltsgeräts gespeichert. Die Identifizierungsangabe kann mittels eines Computers, beispielsweise eines Personal Computers oder eines Laptops aus dem Speicher des jeweiligen Haushaltsgeräts ausgelesen werden und anschließend weiterverarbeitet werden. Gemäß dem Stand der Technik ist es jedoch erforderlich, dass ein Wartungstechniker zu dem Haushaltsgerät fährt und vor Ort den Computer an das Haushaltsgerät anschließt und die Identifizierungsangabe ausliest.

Es ist in diesem Zusammenhang anzumerken, dass die elektronische Steuerung nur betrieben werden kann, so lange die Stromversorgung des Haushaltsgeräts, beispielsweise dessen Netzteil, funktioniert. Fällt jedoch die Haushaltsgeräteelektronik oder beispielsweise das Netzteil des Haushaltsgeräts aus, so kann der Speicher des Haushaltsgeräts nicht mehr angesteuert werden und ein Auslesen der Identifizierungsangabe ist nicht mehr möglich.

Aus diesem Grund ist es üblich, eine die Identifizierungsangabe enthaltende Markierung in Form beispielsweise eines Aufklebers auf das Haushaltsgerät an einem vorgegebenen Platz des Haushaltsgeräts anzubringen, so dass ein Wartungstechniker diese Information selbst bei ausgefallener geräteinterner Elektronik noch ermitteln kann.

Abhängig von der jeweiligen Identifizierungsangabe ermittelt der Wartungstechniker die jeweilige Geräteklasse und eventuell den Gerätetyp, allgemein den Zustand des jeweiligen Haushaltsgeräts und wählt abhängig davon die erforderlichen Werkzeuge und Ersatzteile aus, die er für die Wartung des Haushaltsgeräts benötigt.

Nach erfolgter Reparatur bzw. nach dem Ersetzen der geräteinternen Elektronik in dem Haushaltsgerät muss der Wartungstechniker die Identifizierungsangabe in die neue geräteinterne Elektronik programmieren.

Dieser Schritt ist sehr aufwändig und auch sehr fehlerbehaftet, da die Identifizierungsangabe leicht fehlerhaft eingegeben werden kann.

Ferner kann es bei der üblichen Vorgehensweise vorkommen, dass bei einem sehr selten verkauften Haushaltsgerät ein Wartungstechniker zu /dem Ort kommt, an dem das Haushaltsgerät steht, dort feststellt, dass er nicht die geeigneten Werkzeuge und Ersatzteile bei sich hat, die er für die Wartung dieses Haushaltsgeräts benötigt, er sich diese dann erst beschaffen muss, um dann bei erneuter Anfahrt zu dem Haushaltsgerät die Reparatur durchzuführen.

Diese doppelte Anfahrt führt zu einem erheblichen Kostenaufwand in dem Bereich der Wartung von Haushaltsgeräten.

In WO 99/43068 A1 ist ein Überwachungssystem für eine Vielzahl von elektrischen Haushaltsgeräten offenbart, bei dem jedes Haushaltsgerät über eine spezielle Kommunikationsschnittstelle zum Anschluss an ein Stromnetz verfügt, welches als Kommunikationsnetz dient. Die Ausgestaltung der Kommunikationsschnittstellen ist in WO 99/43068 A1 nicht beschrieben. Insbesondere ist in WO 99/43068 A1 eine Überwachungseinrichtung zur Überwachung mehrerer Haushaltsgeräte offenbart, die eine Schnittstelle zu dem lokalen Stromnetz und eine weitere Schnittstelle zu einem öffentlichen Kommunikationsnetz aufweist.

Der Erfindung liegt das Problem zugrunde, eine Schnittstellenvorrichtung für ein Haushaltsgerät sowie ein Haushaltsgerät anzugeben, bei dem selbst bei Ausfall der geräteinternen Elektronik des Haushaltsgeräts eine Identifizierung des Haushaltsgeräts auf elektronische Weise möglich ist.

Das Problem wird durch die Schnittstellenvorrichtung für ein Haushaltsgerät sowie durch das Haushaltsgerät mit den Merkmalen gemäß den unabhängigen Patentansprüchen gelöst.

Eine Schnittstellenvorrichtung für ein Haushaltsgerät, in welchem eine Identifizierungsangabe gespeichert ist, weist eine erste Kommunikationsschnittstelle zur Kommunikation mit einer Steuerungseinheit des Haushaltsgeräts auf. Ferner ist eine Schnittstellenvorrichtungs-Steuerungseinheit zum Steuern der Schnittstellenvorrichtung vorgesehen sowie eine Stromversorgungseinheit zur Stromversorgung der Schnittstellenvorrichtung, so dass diese auch ohne Stromversorgung des Haushaltsgeräts selbsttätig auf einen in der Schnittstellenvorrichtung ebenfalls vorgesehenen, nicht-flüchtigen Speicher zugreifen kann. Die Schnittstellenvorrichtungs-Steuerungseinheit ist derart eingerichtet, dass bei Anschluss der Schnittstellenvorrichtung an das Haushaltsgerät oder bei Einschalten des Haushaltsgeräts, wenn die Schnittstellenvorrichtung schon an das Haushaltsgerät angeschlossen ist, die Identifizierungsangabe über die erste Kommunikationsschnittstelle ausgelesen wird.

Ferner wird ein Haushaltsgerät mit der oben beschriebenen Schnittstellenvorrichtung bereitgestellt, wobei das Haushaltsgerät mit der Schnittstellenvorrichtung derart gekoppelt ist, dass eine in einem Speicher des Haushaltsgeräts gespeicherte Identifizierungsangabe mittels der Schnittstellenvorrichtungs-Steuerungseinheit über die erste Kommunikationsschnittstelle ausgelesen werden kann und bei Bedarf in dem nicht-flüchtigen Speicher der Schnittstellenvorrichtung gespeichert werden kann.

Anschaulich kann die Erfindung darin gesehen werden, dass eine eigenständige, von der Stromversorgung des Haushaltsgeräts unabhängige Schnittstellenvorrichtung angegeben wird, in der nach erfolgtem Anschließen an das Haushaltsgerät die Identifizierungsangabe, welche das Haushaltsgerät eindeutig identifiziert, in dem nicht-flüchtigen Speicher der Schnittstellenvorrichtung gespeichert werden kann und selbst bei Ausfall der Haushaltsgeräteelektronik bzw. der Stromversorgungseinheit des Haushaltsgeräts ein Wartungstechniker die Identifizierungsangabe, welche in dem nicht-flüchtigen Speicher gespeichert ist, auslesen und somit weiterverwerten kann.

Bevorzugte Ausgestaltungen der Erfindung ergeben sich aus den abhängigen Ansprüchen.

Gemäß einer Ausgestaltung der Erfindung ist die Schnittstellenvorrichtungs-Steuerungseinheit derart eingerichtet dass bei Anschluss der Schnittstellenvorrichtung an das Haushaltsgerät oder bei Einschalten des Haushaltsgeräts, wenn die Schnittstellenvorrichtung an das Haushaltsgerät angeschlossen ist, die Identifizierungsangabe über die erste Kommunikationsschnittstelle ausgelesen wird und in einem nicht-flüchtigen Speicher gespeichert wird.

Die Stromversorgungseinheit kann als ein Netzteil ausgebildet sein, welches die jeweils übliche Netzspannung in eine Betriebsspannung von beispielsweise 5V zum Betreiben der Komponenten der Schnittstellenvorrichtung transformiert.

Alternativ kann die Stromversorgungseinheit eine in die Schnittstellenvorrichtung integrierte Batterie oder ein Akkumulator sein.

Gemäß einer anderen Ausgestaltung der Erfindung ist die zweite Kommunikationsschnittstelle zur Kommunikation gemäß einem an sich bekannten Haushaltsgeräte-Kommunikationsprotokoll, allgemein einem Inhaus-Kommunikationsprotokoll, mit dem Haushaltsgerät kommuniziert, beispielsweise gemäß dem EHS-Kommunikationsprotokoll (Electronic Home System-Kommunikationsprotokoll).

Die Inhaus-Kommunikation kann alternativ über beispielsweise eine Funkschnittstelle und einem entsprechenden Funk-Kommunikationsprotokoll erfolgen.

Gemäß dieser Ausgestaltung der Erfindung kann es vorgesehen sein, dass die Schnittstellenvorrichtung über die zweite Kommunikationsschnittstelle mit einem Residential Gateway gekoppelt ist, welche die Kommunikation zu der Schnittstellenvorrichtung gemäß dem Haushaltsgeräte-Kommunikationsprotokoll ermöglicht und andererseits eine Kommunikation gemäß dem Transport Control Protocol (TCP) / Internet Protocol (IP) über ein öffentliches Kommunikationsnetz, allgemein über das Internet/Intranet. Das Residential Gateway dient somit anschaulich als Protokoll-Umsetzer, der eine Kommunikation über das Internet/Intranet mit einem Haushaltsgerät ermöglicht.

Gemäß dieser Ausgestaltung der Erfindung ist es einem Wartungstechniker nunmehr über das Internet/Intranet auf sehr einfache Weise möglich, Zugriff auf die Schnittstellenvorrichtung und darüber über die in dem nicht-flüchtigen Speicher gespeicherte Identifizierungsangabe zu erlangen, womit es dem Wartungstechniker ermöglicht wird, schon vor Anfahrt zu dem Haushaltsgerät die benötigten Werkzeuge und Ersatzteile bzw. Hardware-/Software-Elemente bereitzustellen.

Eine doppelte Anfahrt zu dem Haushaltsgerät wird somit erfindungsgemäß vermieden.

Die Identifizierungsangabe kann zumindest eine der folgenden Angaben enthalten:
- eine Angabe über den Hersteller des Haushaltsgeräts, beispielsweise eine Angabe darüber, ob das Haushaltsgerät von der Firma Robert Bosch GmbH oder der Firma Siemens AG hergestellt worden ist;
- eine Angabe über die Geräteklasse des Haushaltsgeräts, beispielsweise eine Angabe darüber, ob es sich bei dem Haushaltsgerät um eine Waschmaschine, einen Wäschetrockner, einen Herd, einen Kühlschrank oder einen Gefrierschrank handelt;
- eine Angabe über den Gerätetyp des Haushaltsgeräts;
- eine Angabe über die Gerätevariante des jeweiligen Gerätetyps des Haushaltsgeräts;
- eine Angabe über die in dem Haushaltsgeräts installierte Hardware, beispielsweise Spezialschaltungen oder Treiberschaltungen, die in einer Gerätevariante des Haushaltsgeräts spezifisch vorgesehen sein können;
- eine Angabe über die im dem Haushaltsgerät installierte Software bzw. erfolgte Software-Aktualisierungen, insbesondere von spezifischen, neue Dienste bzw. Funktionen des Haushaltsgeräts bereitstellenden Programmobjekten.

Die Schnittstellenvorrichtungs-Steuerungseinheit kann derart eingerichtet sein, dass nach Auslesen der Identifizierungsangabe über die erste Kommunikationsschnittstelle überprüft wird, ob die Identifizierungsangabe schon in dem nicht-flüchtigen Speicher gespeichert ist und bei dem für den Fall, dass die Identifizierungsangabe in dem nicht-flüchtigen Speicher gespeichert ist, die ausgelesene Identifizierungsangabe verworfen wird.

In diesem Fall ist gewährleistet, dass schon bei Anschließen der Schnittstellenvorrichtung an das Haushaltsgerät oder bei neuerlichem Einschalten des Haushaltsgeräts jeweils die Identifizierungsangabe ausgelesen wird und nur dann der nicht-flüchtige Speicher in der Schnittstellenvorrichtung mit der ausgelesenen Identifizierungsangabe überschrieben wird, wenn nicht zuvor schon die identische Identifizierungsangabe gespeichert worden ist.

Auf diese Weise wird eine flexible Einsetzbarkeit der Schnittstellenvorrichtung bei unterschiedlichen Haushaltsgeräten gewährleistet, da nicht jedes Mal manuell eine Identifizierungsangabe unveränderbar einprogrammiert werden muss, sondern die Identifizierungsangabe in dem nicht-flüchtigen Speicher der Schnittstellenvorrichtung abhängig ist von dem Haushaltsgerät, an das die Schnittstellenvorrichtung jeweils angeschlossen ist.

Gemäß einer anderen Ausgestaltung der Erfindung ist es vorgesehen, dass die Schnittstellenvorrichtungs-Steuerungseinheit derart eingerichtet ist, dass nach Auslesen der Identifizierungsangabe über die erste Kommunikationsschnittstelle überprüft wird, ob die Identifizierungsangabe eine Fehlermeldung ist, und dass für den Fall, dass die Identifizierungsangabe eine Fehlermeldung ist, die in dem nichtflüchtigen Speicher zuvor gespeicherte Identifizierungsangabe über die erste Kommunikationsschnittstelle dem Haushaltsgerät übermittelt wird und in dessen Speicher gespeichert wird.

Auf diese Weise wird bei ausgetauschter Elektronik in dem Hausgerät sehr einfach eine Programmierung der Elektronik mit der Identifizierungsangabe erreicht.

Das Haushaltsgerät, an welches die Schnittstellenvorrichtung angeschlossen sein kann, kann als Waschmaschine, Wäschetrockner, Herd, Kühlschrank, Geschirrspüler, Gefrierschrank, Dunstabzugshaube, Klimaanlage, Kaffeemaschine, Kochmulde, oder Staubsauger ausgestaltet sein.

Ein Ausführungsbeispiel der Erfindung ist in den Figuren dargestellt und wird im Weiteren näher erläutert.

Es zeigen
Figur 1 eine Skizze einer Schnittstellenvorrichtung gemäß einem Ausführungsbeispiel der Erfindung;
Figur 2 eine Skizze eines Gesamtsystems mit einer Waschmaschine, einer daran angeschlossenen Schnittstellenvorrichtung, welche über Modems an ein Residental Gateway angeschlossen ist und darüber an ein öffentliches Kommunikationsnetzwerk;
Figuren 3a und 3b Nachrichtenflussdiagramme, in denen ein fehlerfreies (vgl. Figur 3a) und ein fehlerbehaftetes (vgl. Figur 3b) Auslesen der Identifizierungsangabe aus der Waschmaschine aus einem Haushaltsgerät dargestellt sind.

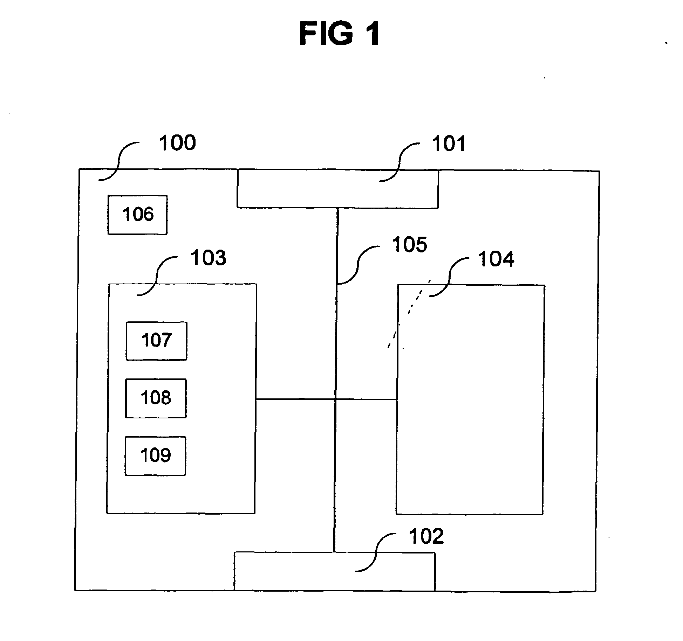

**Fig. 1** zeigt eine Schnittstellenvorrichtung 100 gemäß einem bevorzugten Ausführungsbeispiel der Erfindung.

Die Schnittstellenvorrichtung 100 weist eine erste Kommunikationsschnittstelle 101 sowie eine zweite Kommunikationsschnittstelle 102 auf. Ferner sind ein Speicher 103 und eine Schnittstellenvorrichtungs-Steuerungseinheit 104, gemäß diesem Ausführungsbeispiel eingerichtet als Mikroprozessor, vorgesehen.

Die Kommunikationsschnittstellen 101, 102 sowie der Speicher 103 und der Mikroprozessor 104 sind, vorzugsweise über einen Computerbus 105, alternativ über mehrere Datenschnittstellen, beispielsweise über eine RS232-Schnittstelle, miteinander gekoppelt. Ferner weist die Schnittstellenvorrichtung 100 ein Netzteil 106 als Stromversorgungseinheit auf, über welches der Speicher 103 und der Mikroprozessor 104 betrieben werden. Das Netzteil transformiert eine 220 V Netz-Wechselspannung auf die benötigte Betriebsspannung von 5 V Gleichspannung zum Betreiben der einzelnen Komponenten der Schnittstellenvorrichtung 100, insbesondere zum Betreiben des Speichers 103 und des Mikroprozessors 104.

In dem Speicher 103 sind erfindungsgemäß gespeichert:
- ein erstes Computerprogramm 107, welches einen Protokoll-Stack implementiert zur Kommunikation gemäß einem Haushaltsgeräte-Kommunikationsprotokoll, gemäß diesem Ausführungsbeispiel einen EHS-Protokoll-Stack (Electronic Home System).
- wie im Weiteren näher erläutert wird, nach Auslesen einer Identifizierungsangabe aus dem Speicher des Haushaltsgeräts, an welches die Schnittstellenvorrichtung 100 angeschlossen ist, die Identifizierungsangabe 108 zum eindeutigen identifizieren des Haushaltsgeräts.

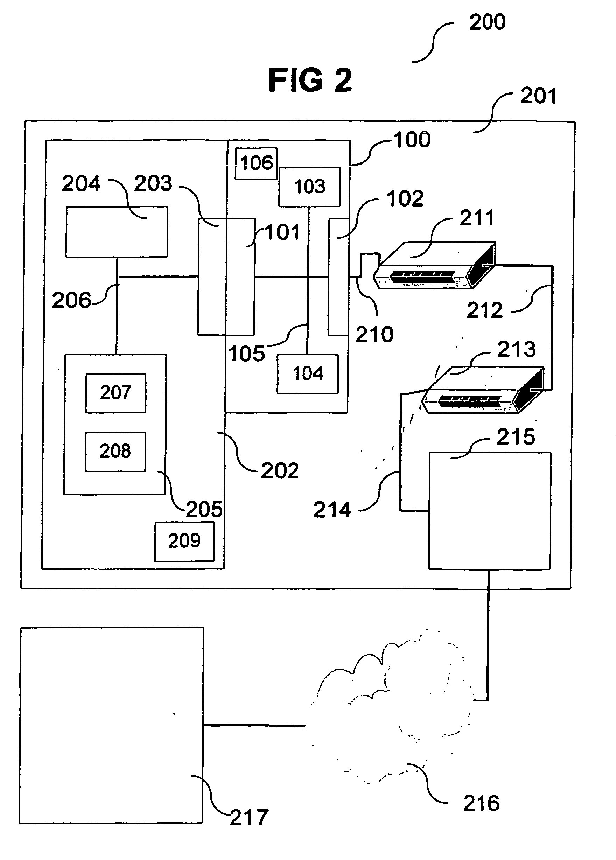

**Fig.2** zeigt in einem Blockdiagramm 200 ein Gebäude 201, in welchem ein Haushaltsgerät 202, gemäß diesem Ausführungsbeispiel eine Waschmaschine 202, aufgestellt ist.

Die Waschmaschine 202 weist eine Kommunikationsschnittstelle 203, einen Mikroprozessor 204 sowie einen Speicher 205 auf, welche, vorzugsweise über einen Computerbus 206, alternativ über mehrere Datenschnittstellen, beispielsweise über eine RS232-Schnittstelle, miteinander gekoppelt sind.

In der Waschmaschine ist ferner ein Waschmaschinen-Netzteil 209 vorgesehen, über welches die Komponenten der Waschmaschine 202 mit Strom versorgt wird.

In dem Speicher 205 ist eine Identifizierungsangabe 207 gespeichert, mit welcher die Waschmaschine eindeutig gegenüber anderen Haushaltsgeräten identifizierbar ist.

Gemäß diesem Ausführungsbeispiel weist die Identifizierungsangabe 207 folgende Informationen auf:
• eine Angabe über den Hersteller des Haushaltsgeräts, beispielsweise ob es sich um ein Gerät der Firma Siemens AG oder Robert Bosch GmbH handelt,
• eine Angabe über die Geräteklasse, das heißt beispielsweise eine Angabe darüber, ob es sich bei dem Gerät um eine Waschmaschine, einen Herd, einen Wäschetrockner, einen Kühlschrank oder einen Gefrierschrank handelt,
• eine Angabe über den Gerätetyp, das heißt beispielsweise eine Angabe darüber,
   • ob es sich bei einer Waschmaschine um eine Frontlader-Waschmaschine oder eine Toplader-Waschmaschine handelt,
   • ob es sich bei einem Herd um einen Herd inklusive Kochfeld, um ein Standgerät oder um Einbausets für die Küchenmodernisierung handelt,
   • ob es sich bei einem Geschirrspüler um ein Einbaugerät, um ein Standgerät zum Anstellen oder um ein Standgerät zum Unterbauen unter ein Regal handelt,
   • ob es sich bei einem Kühlschrank und/oder einem Gefrierschrank um ein Einbaugerät oder um ein Standgerät handelt,
• eine Angabe über die Gerätevariante des jeweiligen Haushaltsgeräts,
   • beispielsweise bei einer Waschmaschine die Angabe über das Fassungsvermögen, über unterschiedliche unterstützte Schleuderzahlen, über die Energieeffizienz oder andere besondere Ausstattungsmerkmale wie unterschiedliche Waschprogramme oder spezielle Optionen, das heißt Funktionen der Waschmaschine,
   • bei einem Herd beispielsweise eine Angabe darüber, welche Farbe das Gerät hat, die Breite der Standgeräte, ob es sich um ein Universal-Heizsystem oder ein konventionelles Heizsystem handelt oder weitere besondere Ausstattungsmerkmale,
   • bei einem Geschirrspüler beispielsweise die Angabe, welche Farbe das Gerät hat, welche Breite oder andere Ausstattungsmerkmale,
   • bei einem Kühlschrank und/oder einem Gefrierschrank beispielsweise die Angabe darüber, welche Energieeffizienz das Gerät aufweist, welche Farbe das Gerät hat sowie welche Breite das Gerät aufweist,
• eine Angabe darüber, welche Hardware und welche Software, insbesondere welche Version der jeweiligen Hardware bzw. Software, jeweils in dem Haushaltsgerät installiert ist.

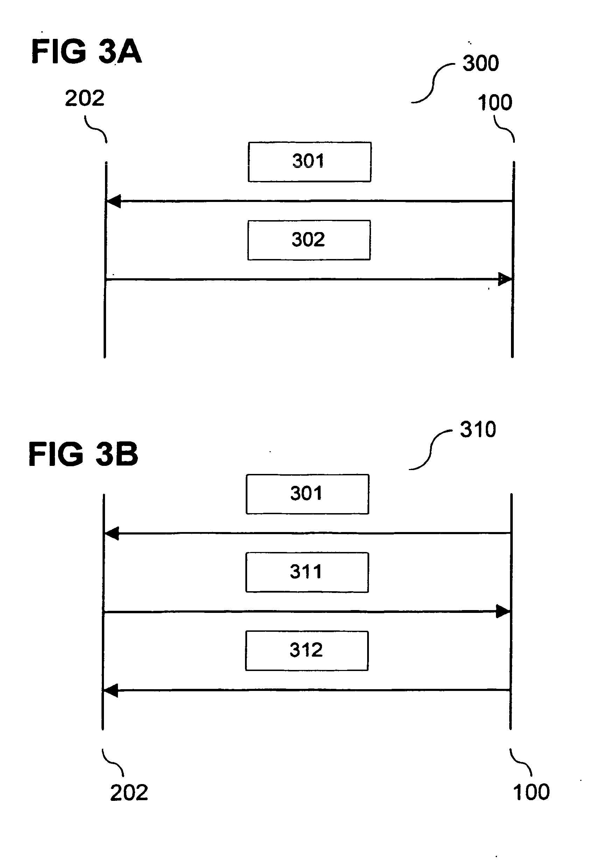

Zusätzlich zu der Identifizierungsangabe 207 ist in dem Speicher 205 ein erstes Computerprogramm-Element 208 gespeichert, welches bei Ausführung durch den Mikroprozessor 204 den im Folgenden im Zusammenhang mit den Fig.3a und Fig.3b beschriebenen Nachrichtenaustausch Waschmaschinen-seitig implementiert. Alternativ können die Identifizierungsangabe 207 und der Protokoll-Stack, gemäß diesem Ausführungsbeispiel also das erste Computerprogramm-Element 208, in unterschiedlichen Speichern gespeichert sein.

Es ist in diesem Zusammenhang anzumerken, dass der Mikroprozessor 204 auch als elektrische Spezialschaltung als Steuereinheit, anders ausgedrückt als Steuerungselektronik der Waschmaschine 202, ausgestaltet sein kann.

Die Kommunikationsschnittstelle 203 der Waschmaschine 202 ist mit der ersten Kommunikationsschnittstelle 101 der Schnittstellenvorrichtung 100 gekoppelt.

Unter Verwenden des ersten Computerprogramm-Elements 208 in dem Speicher 103 der Schnittstellenvorrichtung 100 wird, sobald die Schnittstellenvorrichtung 100 an die Waschmaschine 202 angeschlossen wird, oder, wenn die Schnittstellenvorrichtung 100 schon an die Waschmaschine 202 angeschlossen ist, sobald die Waschmaschine 202 von einem Ausschalt-Zustand in einen Einschalt-Zustand überführt wird, das heißt anschaulich eingeschaltet wird, eine Identifizierüngsangaben-Anforderüngsnachricht 301 an die Waschmaschine 202 übermittelt, wie in dem Nachrichtenflussdiagramm 300 in **Fig. 3a** dargestellt ist.

Nach Empfang der Identifizierungsangaben-Anforderungsnachricht 301 liest der Prozessor 204 der Waschmaschine 202 die Identifizierungsangabe 207 aus dem Speicher 205 aus und übermittelt diese an die Schnittstellenvorrichtung 100 in einer Identifizierungsangaben-Nachricht 302. Die in der ldentifizierungsangaben-Nachricht 302 enthaltene Identifizierungsangabe wird dahingehend überprüft, ob die Identifizierungsangabe schon in dem Speicher 103 gespeichert ist.

Ist dies der Fall, so wird die in dem Speicher 103 enthaltene Identifizierungsangabe 108 unverändert beibehalten und die empfangene Identifizierungsangabe in der Identifizierungsangaben-Nachricht 302 wird verworfen.

Ist jedoch die Identifizierungsangabe noch nicht in dem Speicher 103 gespeichert, so wird die Identifizierungsangabe 108 in dem EEPROM als nicht-flüchtiger Speicher 103 der Schnittstellenvorrichtung 100 gespeichert.

**Fig. 3b** zeigt in einem zweiten Nachrichtenflussdiagramm 310 den Nachrichtenaustausch für den Fall, dass eine neue, noch nicht mit einer Identifizierungsangabe versehene elektronische Steuerung in die Waschmaschine 202 eingebaut worden ist.

In diesem Fall wird von der Waschmaschine 202 in Reaktion auf den Empfang der Identifizierungsangaben-Anforderungsnachricht 301 eine Fehlernachricht 311 erzeugt.

Nach Empfang der Fehlernachricht 311 erzeugt die Schnittstellenvorrichtung 100 eine Identifizierungsangaben-Programmiernachricht 312, welche die in dem nicht-flüchtigen Speicher 103 gespeicherte Identifvierungsangabe 108 enthält sowie den Befehl, diese in den Speicher 205 der Waschmaschine 202 zu programmieren.

Nach Erhalt der Identifizierungsangaben-Programmiernachricht 312 wird von der elektronischen Steuereinheit in der Waschmaschine 202 die nunmehr neu erhaltene Identifizierungsangabe in deren Speicher 205 gespeichert.

Die Schnittstellenvorrichtung 100 ist über eine erste Kommunikationsverbindung 210 mit einem ersten EHS-fähigen Powerline-Modem 211 gekoppelt, welches über eine Stromleitung 212 mit einem zweiten EHS-fähigen Powerline-Modem 213 gekoppelt ist, welche über eine zweite Kommunikationsverbindung 214 mit einem Residental Gateway 215 gekoppelt ist. Das erste EHS-fähigen Powerline-Modem 211 ist alternativ in die Schnittstellenvorrichtung 100 integriert.

Das Residental Gateway 215 setzt die unter Verwendung des EHS-Kommunikationsprotokoll mit der Schnittstellenvorrichtung über die zweite Kommunikationsschnittstelle 102 ausgetauschten Nachrichten um in Nachrichten gemäß dem Internet-/Intranet-Kommunikationsprotokoll, das heißt einem Kommunikationsprotokoll, bei dem die Nachrichten gemäß dem Transport Control Protocol (TCP) und dem Internet Protocol (IP) codiert sind.

Das Residental Gateway 215 ist mit einem öffentlichen Kommunikationsnetz 216, das heißt anschaulich dem Internet/Intranet gekoppelt und darüber mit einem Server-Rechner 217, der bei gemäß diesem Ausführungsbeispiel bei einem Wartungsunternehmen als Wartungsrechner dient.

Tritt nun ein Fehler in der Waschmaschine 202 auf, so wird ein Wartungstechniker darüber informiert und der Wartungstechniker verwendet den Server-Rechner 217, um eine Kommunikationsverbindung mit der Schnittstellenvorrichtung 100 aufzubauen über das Internet und unter Verwendung des Residental Gateway 215 unter Verwendung des EHS-Kommunikationsprotokolls, um eine aus der - von der Stromversorgung der Waschmaschine 202 unabhängigen - Schnittstellenvorrichtung 100 in deren Speicher 103 gespeicherte Identifizierungsangabe 108 auszulesen.

Anhand der ausgelesenen und an den Server-Rechner 217 übermittelten Identifizierungsangabe 108 ist es nunmehr dem Wartungstechniker möglich, detaillierte Informationen über die tatsächlich in dem Gebäude 201 aufgestellte Waschmaschine zu ermitteln, um darüber festzustellen, welche Werkzeuge und welche Ersatzteile er zur Wartung der Waschmaschine 202 benötigt.

Somit ist eine sehr einfache und Kosten sparende, da nur eine Anfahrt benötigende, Wartung der Waschmaschine erfindungsgemäß ermöglicht.

## Patentansprüche

1. Schnittstellenvorrichtung (100) für ein Haushaltsgerät (202), in welchem eine Identifizierungsangabe (207) gespeichert ist, mit einer ersten Kommunikationsschnittstelle (101) zur Kommunikation mit einer Steuerungseinheit des Haushaltsgeräts (202), mit einer zweiten Kommunikationsschnittstelle (102) zur Kommunikation über ein lokales Gebäude-Kommunikationsnetz, **dadurch gekennzeichnet, dass** die Schnittstellenvorrichtung eine Schnittstellenvorrichtungs-Steuerungseinheit (104) zum Steuern der Schnittstellenvorrichtung, einen nichtflüchtigen Speicher (103) und eine Stromversorgungseinheit (106) aufweist, dass die Schnittstellenvorrichtungs-Steuerungseinheit (104) derart eingerichtet ist, dass bei Anschluss der Schnittstellenvorrichtung (100) an das Haushaltsgerät (202) oder bei Einschalten des Haushaltsgeräts (202), wenn die Schnittstellenvorrichtung (100) an das Haushaltsgerät (202) angeschlossen ist, die Identifizierungsangabe (207) über die erste Kommunikationsschnittstelle (101) ausgelesen wird und in dem nichtflüchtigen Speicher (103) gespeichert wird, und dass die Schnittstellenvorrichtungs-Steuerungseinheit (104) derart eingerichtet ist, dass die in dem nichtflüchtigen Speicher (103) gespeicherte Identifizierungsangabe über die zweite Kommunikationsschnittstelle ausgegeben werden kann.

2. Schnittstellenvorrichtung (100) gemäß Anspruch 1, bei der die Stromversorgungseinheit (106) als ein Netzteil ausgebildet ist.

3. Schnittstellenvorrichtung (100) gemäß einem der Ansprüche 1 oder 2, bei der die Identifizierungsangabe zumindest eine der folgenden Angaben enthält:
eine Angabe über den Hersteller des Haushaltsgeräts (202),
eine Angabe über die Geräteklasse des Haushaltsgeräts (202),
eine Angabe über den Gerätetyp des Haushaltsgeräts (202),
eine Angabe über die Gerätevariante des Haushaltsgeräts (202),
eine Angabe über die in dem Haushaltsgerät (202) installierte Hardware,
eine Angabe über die in dem Haushaltsgerät (202) installierte Software.

4. Schnittstellenvorrichtung (100) gemäß einem der Ansprüche 1 bis 3, bei der die Schnittstellenvorrichtungs-Steuerungseinheit (104) derart eingerichtet ist, dass nach Auslesen der Identifizierungsangabe über die erste Kommunikationsschnittstelle (101) überprüft wird, ob die Identifizierungsangabe (207) schon in dem nichtflüchtigen Speicher (103) gespeichert ist, und bei der für den Fall, dass die Identifizierungsangabe (207) schon in dem nichtflüchtigen Speicher (103) gespeichert ist, die ausgelesene Identifizierungsangabe (207) verworfen wird.

5. Schnittstellenvorrichtung (100) gemäß einem der Ansprüche 1 bis 4, bei der die Schnittstellenvorrichtungs-Steuerungseinheit (104) derart eingerichtet ist, dass nach Auslesen der Identifizierungsangabe über die erste Kommunikationsschnittstelle (101) überprüft wird, ob die Identifizierungsangabe (207) eine Fehlermeldung ist, und bei der für den Fall, dass die Identifizierungsangabe (207) eine Fehlermeldung ist, die in dem nichtflüchtigen Speicher (103) zuvor gespeicherte Identifizierungsangabe über die erste Kommunikationsschnittstelle (101) dem Haushaltsgerät übermittelt wird.

6. Schnittstellenvorrichtung (100) gemäß einem der Ansprüche 1 bis 5, bei der die Schnittstellenvorrichtungs-Steuerungseinheit (104) derart eingerichtet ist, dass die Kommunikation über die zweite Kommunikationsschnittstelle (102) gemäß einem Hausgeräte-Kommunikationsprotokoll erfolgt.

7. Schnittstellenvorrichtung (100) gemäß Anspruch 6, bei der die Schnittstellenvorrichtungs-Steuerungseinheit (104) derart eingerichtet ist, dass die Kommunikation über die zweite Kommunikationsschnittstelle (102) gemäß dem EHS-Kommunikationsprotokoll erfolgt.

8. Haushaltsgerät (202) mit einer Schnittstellenvorrichtung (100) gemäß einem der Ansprüche 1 bis 7.

9. Haushaltsgerät (202) gemäß Anspruch 8, eingerichtet als Waschmaschine, Wäschetrockner, Herd, Kühlschrank, Geschirrspüler, Dunstabzugshaube, Klimaanlage, Kaffeemaschine, Staubsauger, Kochmulde, oder Gefrierschrank.

## Claims

1. Interface device (100) for a domestic appliance (202), in which an identification statement (207) is stored, with a first communication interface (101) for communication with a control unit of the domestic appliance (202) and with a second communication interface (102) for communication by way of a local building communication network, **characterised in that** the interface device comprises an interface device control unit (104) for controlling the interface device, a non-volatile memory (103) and a current supply unit (106), that the interface device control unit (104) is equipped in such a manner that on connection of the interface device (100) with the domestic appliance (202) or on switching-on the domestic appliance (202) when the interface device (100) is connected with the domestic appliance (202) the identification statement (207) is read out by way of the first communication interface (101) and stored in the non-volatile memory (103) and that the interface device control unit (104) is equipped in such a manner that the identification statement stored in the non-volatile memory (103) can be issued by way of the second communication interface.

2. Interface device (100) according to claim 1, in which the current supply unit (106) is constructed as a mains power supply unit.

3. Interface device (100) according to one of claims 1 and 2, in which the identification statement contains at least one of the following statements:
a statement about the manufacturer of the domestic appliance (202),
a statement about the appliance category of the domestic appliance (202),
a statement about the appliance type of the domestic appliance (202),
a statement about the appliance variant of the domestic appliance (202),
a statement about the hardware installed in the domestic appliance (202),
a statement about the software installed in the domestic appliance (202).

4. Interface device (100) according to one of claims 1 to 3, in which the interface device control unit (104) is equipped in such a manner that after reading-out of the identification statement by way of the first communication interface (101) it is checked whether the identification statement (207) is already stored in the non-volatile memory (103) and in which if the identification statement (207) is already stored in the non-volatile memory (103) the read-out identification statement (207) is discarded.

5. Interface device (100) according to one of claims 1 to 4, in which the interface device control unit (104) is equipped in such a manner that after reading-out of the identification statement by way of the first communication interface (101) it is checked whether the identification statement (207) is an error report and in which if the identification statement (207) is an error report the identification statement previously stored in the non-volatile memory (103) is communicated by way of the first communication interface (101) to the domestic appliance.

6. Interface device (100) according to one of claims 1 to 5, in which the interface device control unit (104) is equipped in such a manner that the communication by way of the second communication interface (102) is carried out according to a domestic appliance communication protocol.

7. Interface device (100) according to claim 6, in which the interface device control unit (104) is equipped in such a manner that the communication by way of the second communication interface (102) is carried out according to the EHS communication protocol.

8. Domestic appliance (202) with an interface device (100) according to one of claims 1 to 7.

9. Domestic appliance (202) according to claim 8, arranged as a washing machine, laundry drier, oven, refrigerator, dishwasher, fume extractor hood, air-conditioning installation, coffee-maker, vacuum cleaner, cooker hob or freezer.

## Revendications

1. Dispositif d'interface (100) pour un appareil ménager (202), dans lequel est mémorisée une identification (207), équipé d'une première interface de communication (101) pour la communication avec une unité de commande de l'appareil ménager (202), d'une seconde interface de communication (102) pour la communication via un réseau de communication local de bâtiment, **caractérisé en ce que** le dispositif d'interface comporte une unité de commande de dispositif d'interface (104) pour commander le dispositif d'interface, une mémoire non volatile (103) et une unité d'alimentation électrique (106), **en ce que** l'unité de commande du dispositif d'interface (104) est conçue de telle manière que lorsque le dispositif d'interface (100) est raccordé à l'appareil ménager (202) ou lorsque l'appareil ménager (202) est mis sous tension, lorsque le dispositif d'interface (100) est raccordé à l'appareil ménager (202), l'identification (207) est extraite via la première interface de communication (101) et mémorisée dans la mémoire non volatile (103), et **en ce que** l'unité de commande du dispositif d'interface (104) est conçue de telle manière que l'identification mémorisée dans la mémoire non volatile (103) peut être fournie via la seconde interface de communication.

2. Dispositif d'interface (100) selon la revendication 1, dans lequel l'unité d'alimentation électrique (106) est conçue comme bloc d'alimentation.

3. Dispositif d'interface (100) selon l'une des revendications 1 ou 2, dans lequel l'identification contient au moins l'une des indications suivantes :
une indication sur le fabricant de l'appareil ménager (202),
une indication sur la catégorie de l'appareil ménager (202),
une indication sur le type de l'appareil ménager (202),
une indication sur la variante de l'appareil ménager (202),
une indication sur le matériel installé dans l'appareil ménager (202),
une indication sur le logiciel installé dans l'appareil ménager (202).

4. Dispositif d'interface (100) selon l'une des revendications 1 à 3, dans lequel l'unité de commande du dispositif d'interface (104) est conçue de telle manière qu'après l'extraction de l'identification via la première interface de communication (101) il est vérifié si l'identification (207) est déjà mémorisée dans la mémoire non volatile (103) et dans lequel pour le cas où l'identification (207) est déjà mémorisée dans la mémoire non volatile (103), l'identification (207) extraite est rejetée.

5. Dispositif d'interface (100) selon l'une des revendications 1 à 4, dans lequel l'unité de commande du dispositif d'interface (104) est conçue de telle manière qu'après l'extraction de l'identification via la première interface de communication (101) il est vérifié si l'identification (207) est un message d'erreur et dans lequel pour le cas où l'identification (207) est un message d'erreur, l'identification mémorisée auparavant dans la mémoire non volatile (103) est transmise à l'appareil ménager via la première interface de communication (101).

6. Dispositif d'interface (100) selon l'une des revendications 1 à 5, dans lequel l'unité de commande du dispositif d'interface (104) est conçue de telle manière que la communication via la seconde interface de communication (102) s'effectue conformément à un protocole de communication pour appareils ménagers.

7. Dispositif d'interface (100) selon la revendication 6, dans lequel l'unité de commande du dispositif d'interface (104) est conçue de telle manière que la communication via la seconde interface de communication (102) s'effectue conformément au protocole de communication EHS.

8. Appareil ménager (202) muni d'un dispositif d'interface (100) selon l'une des revendications 1 à 7.

9. Appareil ménager (202) selon la revendication 8, conçu comme machine à laver, sèche-linge, cuisinière, réfrigérateur, lave-vaisselle, hotte d'aspiration, installation de climatisation, machine à café, aspirateur, plaque de cuisson ou congélateur.
